(19) **Europäisches Patentamt**

**European Patent Office**

**Office européen des brevets**

(11) Veröffentlichungsnummer: **0 081 813**
**B1**

(12) # EUROPÄISCHE PATENTSCHRIFT

(45) Veröffentlichungstag der Patentschrift:
23.04.86

(51) Int. Cl.⁴: **A 01 B 21/08**, A 01 B 23/06

(21) Anmeldenummer: 82111399.0

(22) Anmeldetag: 09.12.82

(54) Scheibensatz, insb. in Form eines Werkzeuges für Bodenbearbeitungsgeräte.

(30) Priorität: 10.12.81 US 329546

(43) Veröffentlichungstag der Anmeldung:
22.06.83 Patentblatt 83/25

(45) Bekanntmachung des Hinweises auf die Patenterteilung:
23.04.86 Patentblatt 86/17

(84) Benannte Vertragsstaaten:
DE FR GB SE

(56) Entgegenhaltungen:
GB - A - 852 469
GB - A - 1 450 535
US - A - 2 135 192
US - A - 2 506 807

(73) Patentinhaber: DEERE & COMPANY, 1 John Deere Road, Moline Illinois 61265 (US)

(72) Erfinder: Peterson, Willard Emanual, Jr., 205 Hillcrest Dr., Geneseo Illinois 61254 (US)

(74) Vertreter: Fricke, Joachim, Dr. et al, Dr. R. Döring, Dr. J. Fricke, Patentanwälte Josephspitalstrasse 7, D-8000 München 2 (DE)

## Beschreibung

Die Erfindung betrifft einen Scheibensatz, insb. in Form eines Werkzeuges für Bodenbearbeitungsgeräte, mit den Merkmalen des Oberbegriffs des Anspruchs 1.

Ein solcher Scheibensatz ist aus der US-A-24 68 278 bekannt. Bei dieser bekannten Vorrichtung ist eine zentrale, durch den ganzen Scheibensatz reichende Spanneinrichtung zum Festlegen der Scheiben und der Abstandsstücke vorgesehen. Die Spanneinrichtung ist in Form eines Spannrohres ausgebildet. Jedes Abstandsstück weist an seinen Enden Flansche auf. An einem Ende jedes Abstandsstückes ist ein über den Flansch hinausragender zylindrischer Vorsprung vorgesehen, der in eine Ausnehmung am anderen Ende eines benachbarten Abstandsstückes eingreift, und zwar mit relativ engem Sitz. Zwischen den beiden Flanschen ist eine Scheibe eingespannt, durch deren zentrale Öffnung der zylindrische Vorsprung des Abstandsstückes greift. Insgesamt ergibt das eine relativ stabile Anordnung. Die Lagertragabschnitte für den Scheibensatz sind an den Enden des Scheibensatzes angeordnet und sind dort fest mit den Enden des Spannrohres verbunden. Damit kommt der den ganzen Scheibensatz durchgreifenden Spanneinrichtung nicht nur die Funktion zu, die einzelnen Teile des Scheibensatzes in ihrer montierten Stellung zusammenzupressen und zusammenzuhalten, sondern auch dazu, die Lagertragabschnitte aufzunehmen, so dass über die Spanneinrichtung die Last des Scheibensatzes auf die Lagertragabschnitte und von diesen auf den Geräterahmen übertragen wird.

Es ist aber auch bereits bekannt, einen Scheibensatz ohne eine den ganzen Scheibensatz durchgreifende Spanneinrichtung aufzubauen (vgl. US-A-613 292 und SU-A-161 150). In einem Fall weisen die die Scheiben zwischen sich einklemmenden Abstandsstücken an einem Ende eine zentrale Gewindebohrung und am anderen Ende einen Gewindebolzen auf, so dass die einzelnen Abstandsstücke untere Einklemmung der Scheiben fest miteinander verschraubt werden können. Einzelne Abstandsstücke sind dabei als Lagertragabschnitte ausgebildet. In einem anderen Fall sind an den Enden von rohrförmigen Abstandsstücken jeweils Flansche angeschweisst die miteinander und mit den Scheiben durch Spannschrauben fest verbunden werden. Statt eines solchen Abstandsstückes kann ein besonderer Abschnitt als Lagertragabschnitt ausgebildet sein, der ebenfalls an seinen Enden Flansche aufweist, so dass die Lagertragabschnitte nicht an den Enden des Scheibensatzes sondern zwischen ausgewählten Scheiben angeordnet sein können. Bei einem anderen bekannten Scheibensatz mit einem mehrere Scheiben durchgreifenden Spannbolzen besteht der Lagertragabschnitt aus zwei kegelförmigen, sich in entgegengesetzte Richtungen erweiternden Abschnitten, die im Bereich ihres kleineren Durchmessers das Lager tragen und die durch den gemeinsamen Spannbolzen zusammengehalten werden (vgl. GB-A-852 469). Bei Verwendung eines durchgehenden Spannbolzens oder Spannrohres ist ein Austausch eines Teiles des Scheibensatzes nur nach umständlichem Zerlegen des ganzen Scheibensatzes möglich. Auch ist die Variationsmöglichkeit der Arbeitsbreite des Scheibensatzes eingeschränkt. Bei den Scheibensätzen, bei denen auf eine durchgehende Spanneinrichtung verzichtet wird, ist die Stabilität des Scheibensatzes nicht im ausreichenden Masse gewährleistet. Auch ist in diesem Falle die Montage und Demontage der Lagertragteile umständlich.

Es ist Aufgabe der Erfindung, einen Scheibensatz mit den Merkmalen des Oberbegriffs des Anspruchs 1 so weiterzubilden, dass auf eine den ganzen Scheibensatz durchgreifende Spanneinrichtung verzichtet werden kann und dennoch eine sehr stabile starre Ausbildung des Scheibensatzes einerseits und eine einfache Ausbildung und ein variabler Einsatz der Lagertragabschnitte bei Verkleinerung oder Vergrösserung des Scheibensatzes erreicht werden.

Diese Aufgabe wird durch die im kennzeichnenden Teil des Anspruchs 1 enthaltenen Merkmale gelöst.

Bei dieser Ausbildung sind die Teile des Lagertragabschnittes Ergänzungsteile zu den aus Scheiben und Abstandsgliedern bestehenden Teilen des Scheibensatzes. Sie wirken mit diesen gleichartig zusammen wie die Abstandselemente und die Scheiben untereinander. Die Anordnung ist dabei so getroffen, dass sowohl für den Zusammenhalt des Scheibensatzes als auch für die Anordnung der Lagertragabschnitte eine den ganzen Scheibensatz durchgreifende Spanneinrichtung nicht erforderlich ist. Dennoch erhält man sowohl zwischen den Abstandselementen und den Scheiben als auch zwischen den Scheiben und den Lagertragabschnitten eine durchgehend gleichförmig hohe Stabilität und Biegesteifigkeit. Damit können alle Kräfte leicht und sicher und zuverlässig auf die Lager und die über diese auf den Geräterahmen übertragen werden. Die Lagertragabschnitte brauchen nicht an den Enden des Scheibensatzes angeordnet zu werden. Alle Teile, auch die Lager selbst, lassen sich leicht und nach wenigen Handgriffen austauschen. Die beiden Anschlussteile des Lagertragabschnittes lassen sich unabhängig von den angrenzenden Scheiben oder den übrigen Abstandsstücken nach der Lehre des Anspruchs 2 leicht miteinander verspannen und wieder lösen. Die Lagertragabschnitte können an beliebiger Stelle über die Länge des Scheibensatzes angeordnet sein. Insbesondere lässt sich mit dem jeweils aussenliegenden Flansch des Lagertragabschnittes eine zusätzliche Scheibe verbinden. Das zum Festlegen der äussersten und ausserhalb des Lagertragabschnittes liegenden Scheibe dienende Element ist nach Anspruch 5 so ausgebildet, dass es sowohl an dem einen als auch am anderen Ende des Scheibensatzes zur Festlegung der aussenliegenden Scheibe verwendet werden kann.

Die Erfindung wird nachfolgend anhand schematischer Zeichnungen an einem Ausführungsbeispiel näher erläutert.

Es zeigen:

Figur 1 eine Seitenansicht eines Scheibensatzes gemäss der Erfindung im zusammengesetzten Zustand.

Figur 2 im grösseren Massstabe einen axialen Schnitt durch den Scheibensatz nach Fig. 1.

Figur 3 eine Stirnansicht einer Scheibe, wobei die Darstellung die zentrale Öffnung und den Kranz von Bolzenlöchern wiedergibt.

Figur 4 im grösseren Massstabe und im axialen Schnitt ein typisches Abstandsglied.

Figur 5 eine Ansicht des Abstandsgliedes nach Fig. 4 mit Blickrichtung entsprechend der Pfeile 5-5.

Figur 6 eine Stirnansicht des Abstandsgliedes nach Figur 4 mit Blickrichtung entsprechend der Pfeile 6-6.

Figur 7 im axialen Schnitt einen Anschlussteil mit einem Lagertragabschnitt.

Figur 8 in Stirnansicht den Anschlussteil nach Fig. 7 mit Blickrichtung entsprechend der Pfeile 8-8.

Figur 9 die entgegengesetzte Stirnansicht des Anschlussteils nach Fig. 7 mit Blickrichtung entsprechend der Pfeile 9-9 der Figur 7.

Figur 10 im senkrechten Schnitt einen dem Anschlussteil zugeordneten Ergänzungsteil.

Figur 11 den Ergänzungsteil in Stirnansicht mit Blickrichtung entsprechend der Pfeile 11-11 der Figur 10.

Figur 12 eine Stirnansicht des Ergänzungsteils mit Blickrichtung entsprechend der Pfeile 12-12 der Figur 10.

Figur 13 eine Stirnansicht von einem kappenförmigen Endteil zur Befestigung einer Endscheibe an dem Scheibensatz und

Figur 14 einen Schnitt entlang der Schnittlinie 14-14 der Figur 13.

Wenn im Nachfolgenden Ausdrücke wie «rechts», «links», «äusseres Ende» oder dgl. verwendet werden, so dienen diese Ausdrücke lediglich zur Vereinfachung der Beschreibung, sollen jedoch nicht absolut gelten.

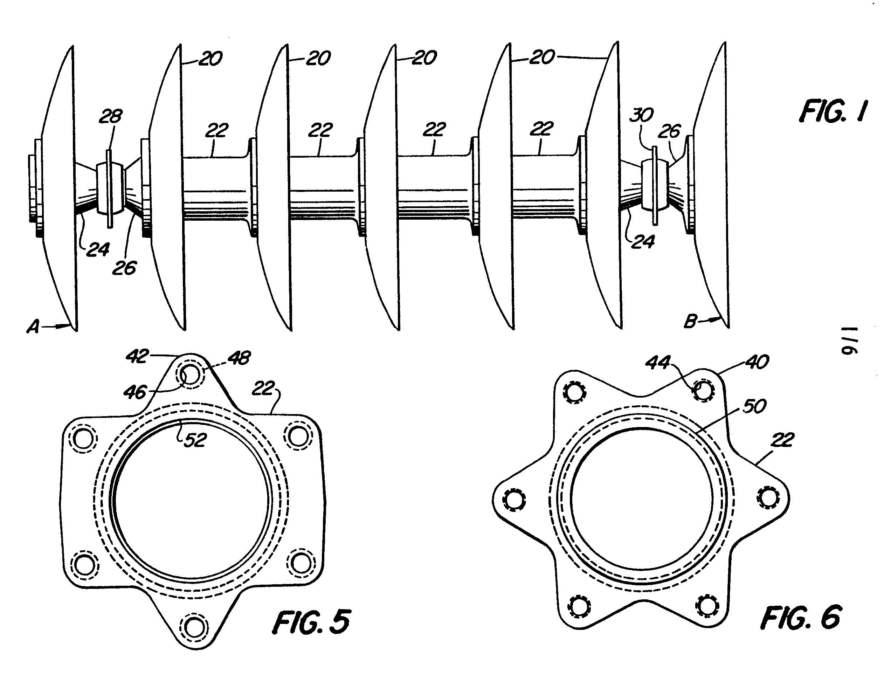

Die Gesamtanordnung ist in ihrem Gesamteindruck ähnlich den bekannten Anordnungen. Der in Fig. 1 dargestellte Scheibensatz hat nur eine relativ kurze Länge und umfasst eine Reihe von gleichen Scheiben 20 üblicher Ausbildung, die in gegenseitigen axialen Abständen entlang einer gemeinsamen Achse montiert und in gegenseitiger axialer Fluchtung durch mehrere Abstandsglieder 22 gehalten sind. An jedem Ende des Scheibensatzes ist dieser mit koaxial untereinander verbundenen längeren und kürzeren Gliedern, nämlich einem Anschlussteil 24 und einem zugehörigen Ergänzungsteil 26 versehen, wobei an einem axialen Ende des Satzes der Anschlussteil 24 und am anderen Ende der Ergänzungsteil 26 axial aussen liegt. Diese Anordnungen dienen zur Montage eines Lagers für den Scheibensatz. So ist am linken Ende des Scheibensatzes ein Lager 28 und ein entsprechendes Lager 30 am rechten Ende des Scheibensatzes vorgesehen. Die Anordnung der Lager in diesen Bereichen ist typisch für bekannte Anordnungen dieser Art. Die Lager dienen dazu, den Scheibensatz an einem entsprechenden Geräterahmen, der nicht gezeigt ist, zu montieren.

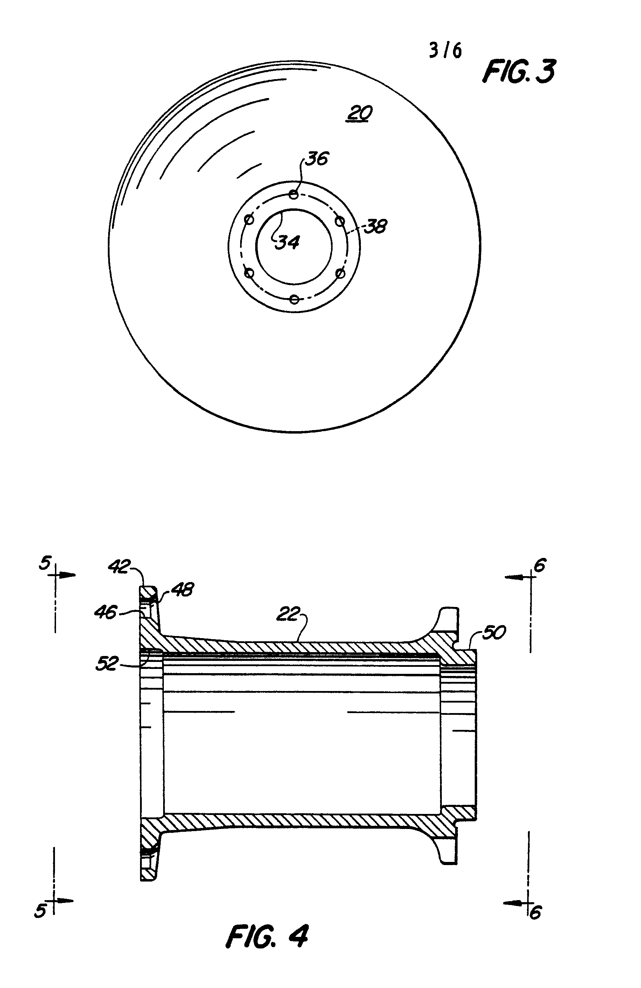

Eine der Scheiben des Scheibensatzes ist in Stirnansicht in Fig. 3 gezeigt. Es ist ersichtlich, dass diese Scheibe 20 eine zentrale, vorzugsweise kreisförmige Öffnung 34 aufweist, die von einem Kranz von Bolzenlöchern 36 umgeben ist. Die Löcher sind auf einem entsprechenden Teilkreis in gleichen Umfangsabständen angeordnet, wobei der Teilkreis mit 38 bezeichnet ist. Die Scheiben des Scheibensatzes sind untereinander gleich ausgebildet, so dass es genügt eine Scheibe in Fig. 3 zu zeigen.

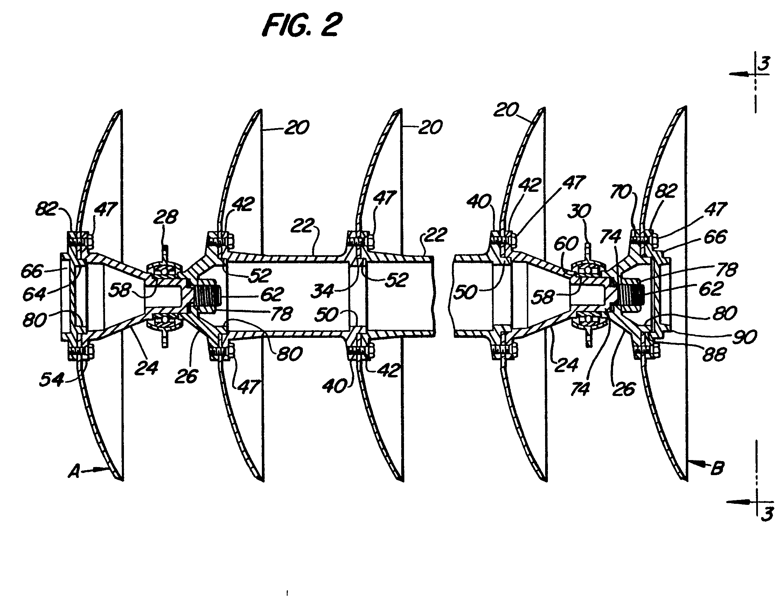

Die Abstandsglieder 22 des Scheibensatzes sind ebenfalls untereinander gleich ausgebildet, so dass nur ein Abstandsglied näher beschrieben werden muss. Ein solches Abstandsglied ist in den Figuren 4, 5 und 6 gezeigt. Jedes Abstandsglied ist aus einem entsprechenden Sphärogusseisen ausgebildet und ist vorzugsweise hohl ausgebildet, um so das Gewicht zu verringern und die erforderliche Stabilität znd Festigkeit zu gewährleisten. Das Abstandsglied weist an seinem rechten Ende (in Fig. 4) einen angeformten radialen Flansch 40 auf (vgl. Fig. 2), während am linken Ende ein angeformter radialer Flansch 42 vorgesehen ist. Beide Flansche sind vorzugsweise stern- oder flügelartig statt kreisförmig ausgebildet, um das Gewicht und Material zu sparen, wobei diese Ausbildung jedoch für das Wesen der Erfindung nicht massgeblich ist. Die Flansche 40 und 42 sind jeweils mit mehreren Bolzenlöchern 44, 46 versehen, die in der Zahl, dem Teilkreis und dem gegenseitigen Umfangsabstand den Bolzenlöchern 36 der Scheibe 20 entsprechen. Bevorzugt können zur Befestigung übliche Felgenbefestigungsschrauben 47 verwendet werden, wie sie in Fig. 2 gezeigt sind. Deshalb sind die Bolzenöffnungen 44 im Flansch 40 Gewindebohrungen, während die Bolzenlöcher 46 glatte Durchsteckbohrungen sind. Die Bohrung 46 kann an der von der Scheibe 20 wegweisenden Seite eine entsprechende Einsenkung 48 aufweisen, um einen entsprechend kegelstumpfförmigen Abschnitt unmittelbar angrenzend an dem Kopf des Bolzens aufzunehmen.

Am rechten Ende des Abstandsgliedes 22 ist einstückig eine ringförmige Schulter 50 angeformt, die axial in Fig. 4 nach rechts vorspringt und zwar über den zugehörigen Flansch 40 hinaus. Der Durchmesser dieser Schulter ist so gewählt, dass sie mit relativ geringem Spiel von der zentralen Öffnung 34 der Scheibe 20 aufgenommen wird. Bei einer Ausführungsform kann der Durchmesser der Scheibenöffnung etwa 120 mm betragen. In diesem Fall beträgt der Aussendurchmesser der Schulter etwa 119,6 mm. Diese Zahlen sollen lediglich das relativ enge Spiel zwischen der Schulter und der Öffnung 34 demonstrieren. Am linken Ende des Abstandsgliedes 22 ist eine innere ringförmige Ausnehmung 52 ausgebildet, deren lichte Weite so bemessen ist, dass sie über die Schulter 50 des auf der anderen Seite der Scheibe benachbarten Abstandsgliedes greift, wobei die Schulter und die Ausnehmung teleskopartig aufeinanderliegen und so die Steifigkeit und Starrheit der Anordnung wesentlich unterstützen. Die lichte Weite der Ausnehmung 52 entspricht etwa der lichten Weite der Öffnung 34 der Scheibe. Die Schulter 50 weist dabei eine Länge auf, dass sie im zusammengebauten Zustand durch die Scheibe 20 und um ein ausreichendes Ausmass in die Ausnehmung 52 ragen kann. Die zugehörige Scheibe 20, die auf der Schulter 50 eines Abstandsgliedes sitzt, wird so zwischen dem Flansch 42 des einen Abstandsgliedes und dem Flansch 40 des links davon liegenden Abstandsgliedes eingespannt, und zwar mit Hilfe der Befestigungsschrauben 47. Die axiale Tiefe der Ausnehmung 52 sollte die axiale Länge der Schultern 50 übersteigen, so dass die Schulter 50 nicht am Ende der Ausnehmung 52 zur Anlage kommt, um so ein zuverlässiges Verspannen der Teile aneinander mit Hilfe der Bolzen 47 sicherzustellen (vgl. Fig. 2).

Aus der bisherigen Beschreibung wird im Zusammenhang mit den Figuren 1 bis 6, insb. in Fig. 1 und 2 deutlich, dass mehrere Abstandsglieder Stirnende an Stirnende angeordnet sind, wobei die Scheiben 20 zwischen diesen eingespannt sind, wodurch eine axial starre Einheit entsteht, welche im dargestellten Beispiel aus fünf Scheiben und vier Abstandsgliedern besteht. Es verbleibt somit nur noch die Notwendigkeit den Scheibensatz dadurch zu ergänzen, dass man sogenannte linksseitige und rechtsseitige Endscheiben anbringt, wie sie mit A und B in Fig. 1 und 2 bezeichnet sind. Selbstverständlich ist zu beachten, dass mehr als die gezeigte Anzahl von Abstandsgliedern und Scheiben zu einem Scheibensatz zusammengefügt werden können. So kann man Scheibensätze von 4 oder 5 m Länge zusammenbauen.

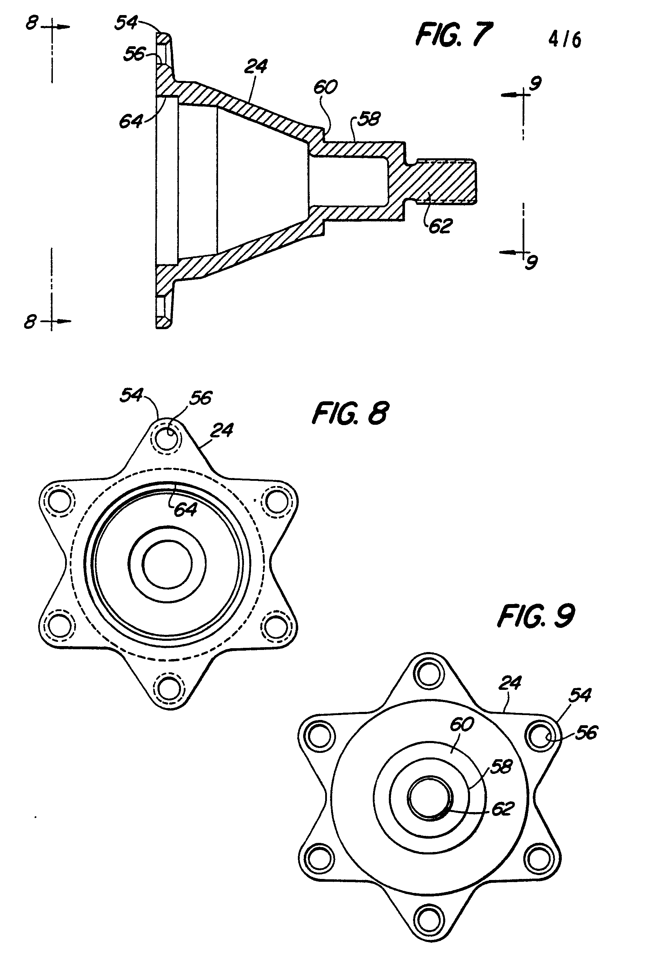

Zur Anbringung der Endscheiben und zur Anbringung von den Scheibensatz tragenden Lagern sind Anschlussteile 24 vorgesehen. Diese Anschlussteile 24 sind, gleichgültig an welcher Stelle des Scheibensatzes ein Lager anzubringen ist, untereinander gleich ausgebildet, so dass nur ein solcher Anschlussteil 24 näher beschrieben zu werden braucht, und zwar anhand der Figuren 7 bis 9. Der relativ lange Anschlussteil ist aus dem gleichen Material wie die Abstandsglieder 22 ausgebildet und weist einen im wesentlichen konischen Umriss auf. An seinem linken Ende nach Fig. 7 weist der Anschlussteil 24 einstückig angeformt einen radialen Flansch 54 auf mit einer Mehrzahl von Bolzenlöchern 56, deren Zahl und Lage den Löchern in der Scheibe 20 entspricht. Wie die Bolzenlöcher an den Flanschen 42 sind auch die Bolzenlöcher 56 an den Flanschen 54 an der Aussenseite kegelstumpfförmig aufgeweitet, um einen kegelstumpfförmigen Teil unter dem Kopf der Bolzen aufzunehmen. Der hohle Anschlussteil 24 weist an seinem rechten verjüngten Ende nach Fig. 7 einen zylindrischen Lagertragabschnitt 58 auf, der an den kegelstumpfförmigen Teil des Anschlussteils anschliesst und zwar über eine axiale weisende Anlageschulter 60. Ein Lager 30, das auf dem Lagertragabschnitt 58 montiert ist, liegt an dieser Schulter 60 an, wie dies Fig. 2 zeigt. An den Lagertragabschnitt 58 schliesst sich axial ein weiter verjüngter Gewindeabschnitt 62 an. Der Flansch 54 des Anschlussteils 24 liegt am rechten Ende des Scheibensatzes nach Fig. 2 an der Scheibe 20 an und wird fest mit dem Flansch 40 des am rechten Ende des Scheibensatzes letzten Abstandsgliedes 22 durch die Schraubbolzen 47 fest verspannt. Der Anschlussteil 24 weist in Höhe des Flansches 54 auch eine der Ausnehmung 52 des Abstandsgliedes 22 entsprechende Ausnehmung 64 auf, um die Schulter 50 des angrenzenden Anschlussgliedes 22 aufnehmen zu können. Die Verbindung zwischen dem Abstandsglied 22, der Scheibe 20 und dem Anschlussteil 24 lässt sich daher genauso starr wie alle anderen Verbindungen ausbilden.

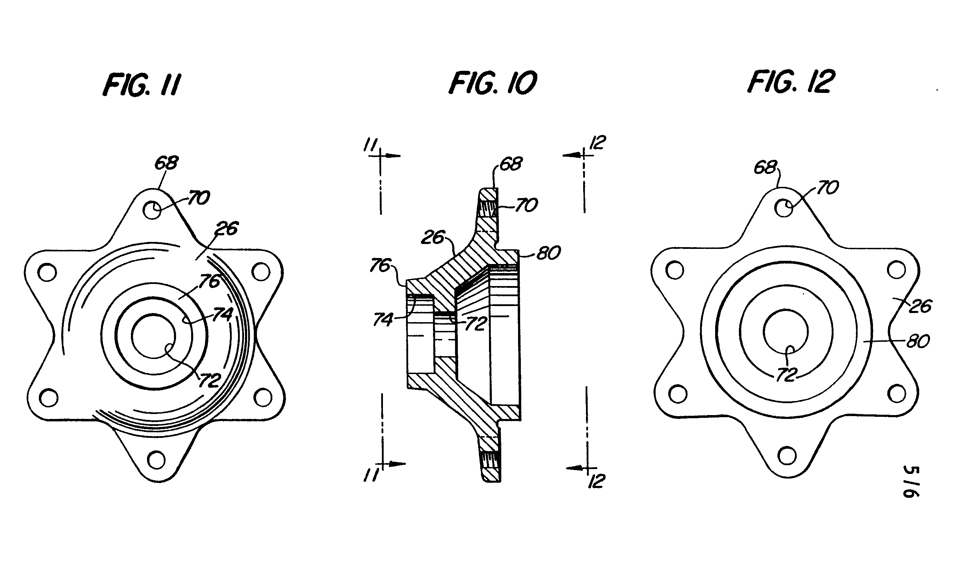

Der Lagertragbereich wird ergänzt durch einen Ergänzungsteil 26, der ebenfalls kegelstumpfförmig und hohl ausgebildet und kürzer ist als der Anschlussteil 24. Die Ergänzungsteile 26 sind an allen Lagerstellen gleich ausgebildet, so dass es genügt einen Ergänzungsteil 26 anhand der Figuren 10 bis 12 näher zu erläutern. Das Material des Ergänzungsteils 26 ist das gleiche wie das des Anschlussteils 24 und der Abstandsglieder 22. Das dünnere Ende des Ergänzungsteils ist dem Lagertragabschnitt 58 des Anschlussteils 24 zugewandt, während das erweiterte Ende einstückig einen radialen Flansch 68 trägt, der der Endscheibe B des Satzes nach Fig. 2 zugewandt ist. Der Flansch 68 weist mehrere Gewindebohrungen 70 auf, die der Zahl und Anordnung nach den Gewindebohrungen des Flansches 40 der Abstandsglieder 22 entsprechen. Das schmalere Ende weist eine axiale Bohrung 72 von geringem Durchmesser und eine nach aussen weisende Erweiterung 74 auf. Die Erweiterung 74 ist so bemessen, dass sie über das Ende des Lagertragabschnittes 58 mit engem Spiel greifen kann. Dazu weist der Lagertragabschnitt 58 eine grössere Länge als die Breite des Lagers 30 oder 28 auf. Die Stirnseite des schmalen Endes des Ergänzungsteils 26 bildet eine Anlageschulter 76 für das betreffende Lager, so dass das Lager in axialer Richtung zwischen den Schultern 60 und 76 gesichert ist. Der Gewindeabschnitt 62 des Anschlussteils 24 ragt durch die enge Bohrung 72 in den hohlen und weiteren Bereich des Ergänzungsteils 26. Eine Mutter 78 wird von aussen auf den Gewindeabschnitt 62 aufgeschraubt, so dass auf diese Weise die Teile 24 und 26 zu einer starren Einheit fest miteinander verspannt werden.

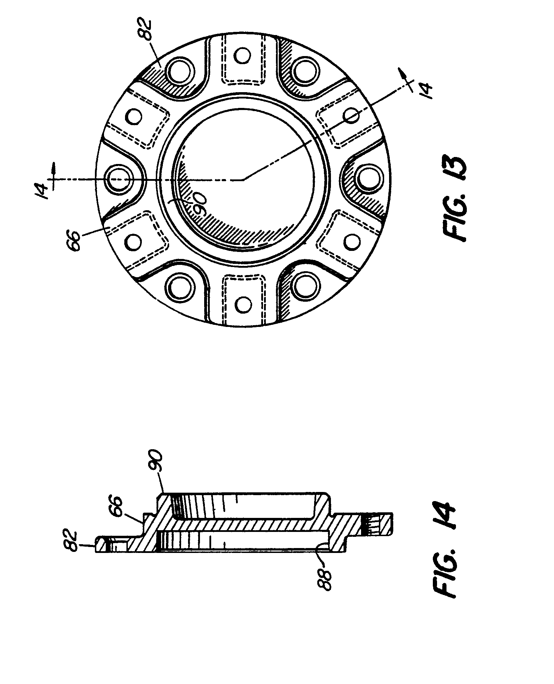

Über den Flansch 68 des Ergänzungsteils 26 ragt axial ein Schulterabschnitt 80 hinaus, der mit engem Spiel durch die zentrale Öffnung 34 der Endscheibe B hindurchgreift. Die Anordnung ist so getroffen, dass die Schulter 80 axial weiter nach rechts vorspringt als die aus dem Gewindeabschnitt 62 und der Mutter 67 gebildeten Verbindungsabschnitte, wie dies Fig. 2 zeigt. Diese Verbindung wird hergestellt, bevor die Endscheibe B aufgefädelt wird. Nach dem Auffädeln der Scheibe wird die geschlossene Endkappe 82 aufgesetzt. Diese weist einen radialen Flansch 82 entsprechend den Flanschen 54 bzw. 42 auf. In dem Flansch sind entsprechende angesenkte Bolzenöffnungen vorgesehen, so dass der Flansch 82, die Endscheibe B und der Flansch 68 fest miteinander verspannt werden können. Die Endkappe weist jedoch in axialer Richtung gegeneinander versetzte Flanschabschnitte auf, wobei in den gegeneinander versetzten Flanschabschnitten zwei Sätze von Bohrungen vorgesehen sind, wie dies die Figuren 13 und 14 zeigen. Der eine Bohrungssatz besteht aus Gewindebohrungen während der andere Bohrungssatz aus glatten Bohrungen mit Ansenkungen besteht. Dies ermöglicht die Anwendung der Endkappe gleichermassen an den entgegengesetzten Enden des Scheibensatzes, wo die Endkappen 66 in entgegengesetzter Lage angebracht werden müssen (vgl. Fig. 2).

Die Kappe 66 weist an einem Ende eine Ausnehmung 88 und am anderen Ende eine axiale Schulter 90 auf. Diese entsprechen in ihren Abmessungen und Funktionen den entsprechend früher beschriebenen Schultern und Ausnehmungen der anderen Teile und sorgen für ein teleskopartiges Ineinandergreifen der beiderseits einer Scheibe zusammentreffenden Teile. Die Ausnehmung 88 nimmt so die Schulter 80 des Ergänzungsteils 26 auf, während die Schulter 90 am anderen Ende des Scheibensatzes von der Ausnehmung 64 des Anschlussteils 24 aufgenommen wird.

Man erkennt, dass die zur Aufnahme eines Lagerabschnittes dienenden Teile 24, 26 am rechten Ende und am linken Ende des Scheibensatzes ebenso wie an jeder weiteren Lagerstelle in gleicher axialer Reihenfolge angeordnet sind, so dass am rechten Ende der Ergänzungsteil 26 und am linken Ende der Anschlussteil 24 aussen liegen. Beide Teile können zur Festlegung einer Endscheibe A oder B mit der gleichen Endkappe 66 zusammenwirken. Vor dem Aufsetzen der Endscheibe werden die Teile 24 und 26 nach Einsetzen eines Lagers 28 bzw. 30 fest montiert. Durch die beiden Bohrungssätze der Abschlusskappen 66 können diese wahlweise rechts oder links an dem Satz eingesetzt werden.

Wenn der Satz nach Fig. 1 oder 2 verlängert werden soll, wird die entsprechende Endkappe 66 ersetzt durch ein Abstandsglied 22, das mit seinem rechten Flansch 40 mit dem Flansch 54 des Anschlussteils am linken Ende des Satzes oder mit seinem Flansch 42 mit dem Flansch 68 des Ergänzungsteils am rechten Ende des Satzes fest verspannt wird. Durch weitere Anfügung von Scheiben und Abstandsgliedern kann der Satz nach rechts und links beliebig verlängert werden. Es können auch an beliebiger Stelle entsprechende Lagertragabschnitte vorgesehen werden, wobei die Anordnung in gleicher Weise dort wiederholt wird, wie sie sich aus Fig. 2 ergibt.

Da die Anordnung aus untereinander gleichen Teilen in beliebiger Länge und in beliebiger Verteilung der Lagerstellen aufgebaut werden kann ergibt sich eine enorme Flexibilität in der Handhabung der Teile zum Aufbau beliebig langer Scheibensätze, wobei die Lagertragabschnitte an beliebigen Stellen auf der Länge des Satzes angeordnet werden können. Die Scheibensätze können jederzeit verkürzt oder verlängert werden, ohne dass es eines besonderen Aufwandes bedarf.

**Patentansprüche**

1. Scheibensatz, insb. in Form eines Werkzeugs für Bodenbearbeitungsgeräte, der mehrere Scheiben (20) mit einer zentralen Öffnung (34) und mehrere damit in axialer Fluchtung und abwechselnd angeordnete Abstandsglieder (22) aufweist, die axial zusammenspannbar sind, bei dem jedes Abstandsglied (22) an beiden Enden Flansche (40, 42) zum Einspannen der Scheiben (20), an einem Ende einen über den Flansch (40) axial vorspringenden Schulterabschnitt (50) und am anderen Ende eine rinförmige Ausnehmung (52) zur teleskopartigen Aufnahme des im wesentlichen spielfrei durch die zentrale Öffnung (34) der Scheibe (20) greifenden Schulterabschnittes (50) eines benachbarten Abstandsgliedes (22) aufweist, und bei dem zwei den Enden des Scheibensatzes zugeordnete Lagerabschnitte (58) zur drehbaren Lagerung und Abstützung des Scheibensatzes vorgesehen sind, dadurch gekennzeichnet, dass zur Eliminierung eines den ganzen Scheibensatz durchgreifenden Spannbolzens jeder Lagertragabschnitt (58) aus zwei konischen Anschlussteilen (24, 26) zusammengesetzt ist, von denen ein jedes an einem Ende einen Flansch (54, 68) und eine Ausnehmung (64) bzw. einen axial über den Flansch vorspringenden Schulterabschnitt (80) aufweisen, die jeweils dem Flansch (42) und der Ausnehmung (52) auf der einen Seite bzw. dem Schulterabschnitt (50) auf der anderen Seite der Abstandsglieder (22) entsprechen und mit diesen zusammenwirken, dass beide Anschlussteile (24, 26) zu ihren vom Flansch abgewandten Ende hin im Durchmesser eingezogen und miteinander fest verbunden sind und einen zylindrischen Lagerabschnitt (58) und seitliche Anlageschultern (60, 76) für das Lager (28, 30) aufweisen, und dass die Scheiben (20) und die Flansche (40, 42, 54, 68) miteinander fluchtende Öffnungen zur Aufnahme von Spannschrauben (47) aufweisen.

2. Scheibensatz nach Anspruch 1, dadurch gekennzeichnet, dass der eine Anschlussteil (24) die eine Anlageschulter (60), den zylindrischen Aufnahmeabschnitt (58) für das Lager und einen über diesen hinausragenden Gewindezapfen (62) und der andere Anschlagteil (26) eine zylindrische Ausnehmung (74) zur teilweisen Aufnahme des zylindrischen Aufnahmeabschnittes (58), die andere Anlageschulter (76) und eine Bohrung (72) für den Durchgriff des Gewindezapfens (62) aufweisen.

3. Scheibensatz nach Anspruch 1 oder 2, dadurch gekennzeichnet, dass mit dem jeweils aussenliegenden Flansch (54 bzw. 68) des Lagertragabschnittes (58) eine zusätzliche Scheibe (A, B) verbindbar ist.

4. Scheibensatz nach Anspruch 3, dadurch gekennzeichnet, dass zum Verspannen der zusätzlichen Scheibe (A, B) ein kappenförmiges Endstück (66) mit einem den Flansch (54 bzw. 68) des Lagertragabschnittes (58) entsprechenden Spannflansch (82) vorgesehen ist.

5. Scheibensatz nach Anspruch 3, dadurch gekennzeichnet, dass ein kappenförmiges Endstück (66) vorgesehen ist, das den Anschlussteilen (24, 26) entsprechende Flansche (82), Schulter- und Aufnahmeabschnitte (90, 88) aufweist und in einer Stellung an dem einen axialen Ende und in einer um 180° gewendeten Stellung an dem anderen axialen Ende des Scheibensatzes unter Einspannung jeweils einer zusätzlichen Scheibe (20) mit dem freiliegenden Flansch (54 bzw. 68) eines der Anschlussteile (24, 26) des Lagertragabschnittes (58) verspannbar ist.

**Revendications**

1. Jeu de disques, en particulier en forme d'outil pour appareils pour le travail du sol, comportant plusieurs disques (20) présentant un orifice central (34) et plusieurs éléments d'entretoisement (22) alignés axialement avec les disques et disposés en alternance, ces éléments pouvant être serrés ensemble axialement, dans lequel chaque élément d'entretoisement (22) présente aux deux extrémités des brides (40, 42) pour le serrage entre elles des disques (20), à une extrémité un tronçon formant épaulement (50) faisant saillie axialement au-delà de la bride (40) et à l'autre extrémité une cavité annulaire (52) pour la réception télescopique de l'épaulement (50) d'un élément d'entretoisement voisin (22), qui s'engage en principe sans jeu à travers l'orifice central (34) du disque (20), et dans lequel deux tronçon formant portées (58) conjugués aux extrémités du jeu de disques sont prévus pour le montage à rotation et l'appui de jeu de disques, caractérisé en ce que, pour l'élimination d'un axe ou boulon de serrage traversant l'ensemble du jeu de disques, chaque tronçon formant portée (58) est formé par la réunion de deux éléments de raccordement coniques (24, 26), parmi lesquels chacun comporte à une extrémité une bride (54, 68) et une cavité (64), ou bien un épaulement (80) faisant saillie axialement au-delà de la bride, qui correspondent chaque fois à la bride (42) et à la cavité (52) prévus d'un côté, ou bien au tronçon formant épaulement (50) prévu de l'autre côté des éléments d'entretoisement (22), et qui coopèrent avec ces parties, en ce que les deux éléments de raccordement (24, 26) vont en diminuant de diamètre vers leur extrémité opposée à la bride et son réunis fermement entre eux, et comportent un tronçon formant portée cylindrique (58) et des épaulement de butée latéraux (60, 76) pour le palier (28, 30), et en ce que les disques (20) et les brides (40, 42, 54, 68) présentent des orifices alignés entre eux pour la réception de boulons de serrage (47).

2. Jeu de disque suivant la revendication 1, caractérisé en ce que l'un des éléments de raccordement (24) comporte l'un des épaulements de butée (60), le tronçon de réception cylindrique (58) destiné au palier et un goujon fileté (62) faisant saillie au-delà de celui-ci, et l'autre l'élément de butée (26) comporte une cavité cylindrique (74) pour la réception partielle du tronçon de réception cylindrique (58), l'autre épaulement de butée (76) et un preçage (72) pour le passage du goujon fileté (62).

3. Jeu de disques suivant la revendication 1 ou 2, caractérisé en ce qu'un disque supplémentaire (A, B) peut être réuni à la bride (54 ou 68) située chaque fois à l'extérieur du tronçon formant portée (58).

4. Jeu de disques suivant la revendication 3, caractérisé en ce que, pour le serrage du disque supplémentaire (A, B), il est prévu une pièce d'extrémité en forme de chapeau (66) comportant une bride de serrage (82) correspondant à la bride (54 ou 68) du tronçon formant portée (58).

5. Jeu de disques suivant la revendication 3, caractérisé en ce qu'il est prévu une pièce d'extrémité en forme de chapeau (66) qui comporte une bride (82), un épaulement (90) et un tronçon de réception (88) correspondant à ceux des éléments de raccordement (24, 26) et qui peut être serrée dans une position à l'une des extrémités axiales et dans une position inversée de 180° à l'autre extrémité axiale du jeu de disques, en enserrant chaque fois un disque supplémentaire (20) par la bride (54 ou 68) s'étendant librement de l'un des éléments de raccordement (24, 26) du tronçon formant portée (58).

**Claims**

1. A disc set, in particular in the form of a tool for soil cultivating implements, which has a plurality of discs (20) having a central opening (34) and a plurality of spacer members (22) arranged alternately and in axial alignment therewith, which can be axially tightened together, wherein each spacer member (22) is provided at both ends with flanges (40, 42) for clamping the discs (20), at one end with a shoulder portion (50) projecting axially beyond the flange (40), and at the other end with an annular recess (52) for telescopically receiving the shoulder portion (50) of an adjacent spacer member (22), which shoulder portion engages substantially without play through the central opening (34) in the disc (20), and wherein there are provided two mounting portions (58) associated with the ends of the disc set, for rotatably mounting and supporting the disc set, characterised in that to eliminate a clamping bolt which extends through the entire disc set, each mounting portion (58) is composed of two conical connecting parts (24, 26), each of which is provided at one end respectively with a flange (54, 68) and a recess (64), and a shoulder portion (80) projecting axially beyond the flange, which respectively correspond to and co-operate with the flange (42) and the recess (52) on the one side of the spacer members (22) and the shoulder portion (50) on the other side of the spacer members (22), that both connecting parts (24, 26) are reduced in diameter towards their end remote from the flange and are fixedly connected together and have a cylindrical mounting portion (58) and lateral contact shoulders (60, 76) for the bearing (28, 30), and that the discs (20) and the flanges (40, 42, 54, 68) have mutually aligned openings for receiving clamping screws (47).

2. A disc set according to claim 1 characterised in that the one connecting part (24) has the one contact shoulder (60), the cylindrical mounting portion (58) for the bearing and a screwthreaded journal (62) extending beyond said mounting portion, and the other connecting part (26) has a cylindrical recess (74) for partially receiving the cylindrical mounting portion (58), the other contact shoulder (76) and a bore (72) for the screwthreaded journal (62) to pass therethrough.

3. A disc set according to claim 1 or claim 2 characterised in that an additional disc (A, B) can be connected to the respective outward flange (54 or 68) of the mounting portion (58).

4. A disc set according to claim 3 characterised in that a cap-like end portion (66) having a clamping flange (82) corresponding to the flange (54 or 68 respectively) of the mounting portion (58) is provided for clamping the additional disc (A, B).

5. A disc set according to claim 3 characterised in that there is provided a cap-like end portion (66) which has, corresponding to the connecting parts (24, 26), flanges (82) and shoulder and mounting portions (90, 88) and can be clamped in one position at one axial end of the disc set and in a position in which is is turned through 180° at the other axial end of the disc set, respectively clamping an additional disc (20) in position, with the exposed flange (54 or 68 respectively) of one of the connecting parts (24, 26) of the mounting portion (58).

1/6

FIG. 1

FIG. 6

FIG. 5

2 / 6

FIG. 2

3/6 *FIG. 3*

*FIG. 4*

*FIG. 7*

*FIG. 8*

*FIG. 9*

FIG. 11

FIG. 10

FIG. 12

*FIG. 13*

*FIG. 14*